# EUROPÄISCHE PATENTANMELDUNG

(11) **EP 0 982 195 A2**
(43) Veröffentlichungstag der Anmeldung: **01.03.2000**
(21) Anmeldenummer: 99116215.7
(22) Anmeldetag: 17.08.1999
(51) Int. Cl.: B60R 16/02

(54) **Elektrische Verbindung**

(30) Priorität: 28.08.1998 DE 19839258
(71) Anmelder: Delphi Technologies, Inc., Troy, MI 48007 (US)
(72) Erfinder: Büscher, Hans-Joachim, 40476 Düsseldorf (DE)
(74) Vertreter: Manitz, Finsterwald & Partner

(57) **Zusammenfassung**

Eine elektrische Verbindung zur Anbindung einer Kraftfahrzeugschiebetüre an eine rahmenfeste Verkabelung (44) weist einen elastischen und isolierten Leiter (10) auf, der in einer karosseriefesten Führung (12) angeordnet ist, in die ein Mitnehmer (16) der Schiebetür eingreift, an dem ein Ende des Leiters (10) befestigt ist, das mit der türseitigen Verkabelung verbindbar ist

## Beschreibung

Die vorliegende Erfindung betrifft eine elektrische Verbindung zur Anbindung einer Kraftfahrzeugschiebetüre an eine rahmenfeste Verkabelung und insbesondere zur permanenten elektrischen Anbindung der Schiebetüre an die Kraftfahrzeugelektrik.

Aufgrund gestiegener Komfortanforderungen bei Kraftfahrzeugschiebetüren (elektrische Zentralverriegelung mit Diebstahlsicherungsfunktion, elektrische Kindersicherungsfunktion, elektrische Fensterheber, elektrische Türschließhilfe, elektrischer Türschloßöffnungsantrieb sowie eine Einbindung der elektrischen Türsysteme in ein BUS-Informationssystem) ist eine permanente elektrische Anbindung der Kraftfahrzeugschiebetür an die Kraftfahrzeugelektrik erforderlich.

Eine derartige Anbindung ist in Form von federnden Türkontakten grundsätzlich bekannt, jedoch können die hier miteinander in Kontakt stehenden Kontaktflächen leicht verschmutzen, wodurch Systemstörungen verursacht werden, die unerwünscht sind. Ferner erschwert die Federkraft und die Anzahl der auf dem letzten Fahrweg der Schiebetür in Eingriff kommenden Türkontakte das Schließen der Schiebetür. Schließlich erschwert die Erhöhung der Schließkraft durch federnde Türkontakte bei einer motorbetriebenen Schiebetür die sensitive Erkennung eines Einklemmfalles mittels einer elektronischen Motorüberwachung.

Es ist die Aufgabe der vorliegenden Erfindung, eine elektrische Verbindung zur permanenten Anbindung einer Kraftfahrzeugschiebetüre an eine rahmenfeste Verkabelung zu schaffen, mit der auf kostengünstige Weise eine störungsfreie elektrische Anbindung einer Kraftfahrzeugschiebetür erfolgen kann, die bei Bedarf auch nachrüstbar ist.

Die Lösung dieser Aufgabe erfolgt durch die Merkmale von Anspruch 1 und insbesondere dadurch, daß zumindest ein elastischer und isolierter Leiter vorgesehen ist, der in einer karosseriefesten Führung angeordnet und dort vorzugsweise um etwa 180° umgelenkt ist. In die Führung greift ein Mitnehmer der Schiebetür ein, wobei an dem Mitnehmer ein Ende des Leiters befestigt ist, das mit der türseitigen Verkabelung verbindbar ist. Ein Federmittel ist vorgesehen, durch das der Leiter zumindest teilweise gegen die Führung gedrückt wird.

Erfindungsgemäß wird die elektrische Anbindung der Kraftfahrzeugschiebetür an die Kraftfahrzeugelektrik durch ein federelastisches Kabel geschaffen, welches die Verbindung zwischen dem Fahrzeug- und dem Schiebetürkabelbaum schafft und das in der Führung durch das Federmittel so gehalten wird, daß es sich aus der Führung nicht lösen kann, während die Schiebetür betätigt wird oder während das Fahrzeug fährt. Durch die Umlenkung des Leiters um 180° innerhalb der Führung kann ein Teil des Leiters bei Betätigung der Schiebetür innerhalb der Führung hin- und herbewegt werden, wobei sich der Leiter innerhalb der Führung selbständig aufrollt und wieder abrollt bzw. auf sich selbst gefaltet wird.

Die erfindungsgemäße Lösung ist aufgrund der wenigen benötigten Teile wesentlich kostengünstiger als die bekannten, konventionellen, federnden Türkontakte oder als andere bekannte Lösungen mit einer Kabelaufspulautomatik. Ferner läßt sich das erfindungsgemäße System leicht nachträglich in ein Fahrzeug installieren und bei Bedarf auswechseln. Durch eine absolut störungsfreie, permanente elektrische Anbindung der Schiebetür können Ausführungsformen mit elektrischen Ansteuerungs- und Kontrollsystemen oder BUS-Systemen technisch zuverlässig realisiert werden. Ferner besteht zusätzlich die Möglichkeit, den Einklemmbereich motorunabhängig mit entsprechenden Sensoren über den gesamten Verfahrweg der Tür zu überwachen.

Vorteilhafte Ausführungsformen der Erfindung sind in der Beschreibung, den Figuren sowie den Unteransprüchen beschrieben.

Nach einer ersten vorteilhaften Ausführungsform ist das Federmittel durch den Leiter selbst gebildet und/oder in diesen integriert. So ist es beispielsweise möglich, für den elektrischen Leiter einen federharten Werkstoff auszuwählen, so daß das Federmittel durch den Leiter selbst gebildet ist. Nach einer alternativen Ausführungsform kann der Leiter aus einem herkömmlichen, elastischen Material bestehen (beispielsweise verdrillte Adern), wobei innerhalb der Isolierung zusätzlich federnde Elemente vorgesehen sind, die als Federmittel dienen. Alternativ kann auch die Isolierung des Leiters aus einem federnden Werkstoff bestehen, um den Leiter bzw. die Isolierung gegen die Führung zu drücken.

Nach einer weiteren vorteilhaften Ausführungsform ist das Federmittel als separates Bauteil zu dem isolierten Leiter vorgesehen, wobei das Federmittel in diesem Fall vorzugsweise im wesentlichen parallel zum Leiter angeordnet ist. Bevorzugt ist das Federmittel aus elektrisch leitendem Material hergestellt und an seinem einen Ende leitend mit der Karosserie (40) und an seinem anderen Ende leitend mit der Schiebetüre (30) verbunden. Hierdurch ergibt sich der große Vorteil, daß die Schiebetüre zu jedem Zeitpunkt leitend mit der Karosserie verbunden ist, wobei das Federmittel als permanente Masseverbindung dient.

Eine besonders vorteilhafte Ausführungsform ergibt sich dadurch, daß zumindest zwei separate Leiter vorgesehen sind, zwischen denen das Federmittel vorgesehen ist, das vorzugsweise aus elektrisch leitendem Material besteht. Bei dieser Ausführungsform kann das Federmittel zusätzlich als Abschirmung zwischen den beiden separaten Leitern herangezogen werden.

Die Führung ist bevorzugt so ausgebildet, daß der Leiter an zwei, vorzugsweise an drei Seiten geführt ist. Hierdurch ist sichergestellt, daß der Leiter stets in der Führung gehalten ist, und zwar sowohl für den Fall einer Betätigung der Schiebetür wie für den Fall, daß das Kraftfahrzeug fährt.

Eine konstruktiv besonders einfache Variante der Führung ist durch eine schienenartige Führung gegeben, die einen im wesentlichen C-förmigen Querschnitt aufweist. Hierbei kann der Mitnehmer durch die Aussparung zwischen den Schenkeln des C in die Führung eingreifen.

Um bei einer großen Anzahl von zu übertragenden Signalen zwischen Schiebetür und Kraftfahrzeug eine geringe Baugröße beibehalten zu können, kann der Leiter als mehrpoliges Flachbandkabel ausgebildet sein. Hierbei ist es auch möglich, mehrere derartige Flachbandkabel parallel zu verwenden.

Die Auffederkraft des Leiters bzw. des Flachbandkabels sollte zweckmäßigerweise so Mein wie funktionstechnisch möglich sein, damit das Gleiten zwischen dem Leiter und der Führungsschiene möglich ist. Hierbei kann die Reibung zwischen dem Leiter bzw. dem Kabel und der Führung durch eine entsprechend reibungsreduzierende Materialauswahl bei den Werkstoffen der Führung und bei dem Außenmaterial des Leiters minimiert werden. Auch ist eine Reibungsminimierung durch Aufbringen entsprechender, reibungsreduzierender Oberflächen auf die Führung und/oder das Flachbandkabel möglich.

Nachfolgend wird die Erfindung rein beispielhaft anhand vorteilhafter Ausführungsformen und unter Bezugnahme auf die beigefügten Zeichnungen beschrieben. Es zeigen:
- Fig. 1: eine Querschnittsansicht durch eine elektrische Verbindung gemäß der Erfindung;
- Fig. 2: eine Schnittansicht durch die Verbindung gemäß Fig. 1;
- Fig. 3: eine zu Fig. 1 ähnliche Ansicht einer weiteren Ausführungsform;
- Fig. 4: eine zu Fig. 3 ähnliche Ansicht einer weiteren Ausführungsform;
- Fig. 5: einen Schnitt durch Leiter und Federelement von Fig. 3;
- Fig. 6: einen Schnitt durch Leiter und Federelement von Fig. 4;
- Fig. 7 bis 9: Schnittansichten durch verschiedene Ausführungsformen von Leitern;
und
- Fig. 10: eine perspektivische, teilweise geschnittene Innenansicht einer in ein Kraftfahrzeug eingebauten elektrischen Verbindung gemäß der Erfindung.

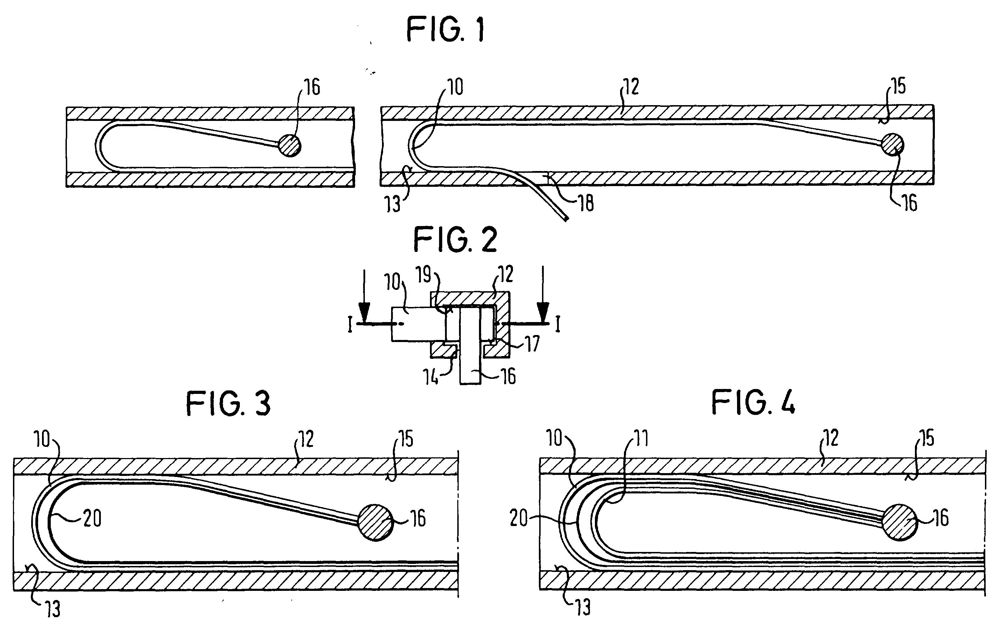

Fig. 1 zeigt eine Schnittansicht durch eine elektrische Verbindung zur Anbindung einer Kraftfahrzeugschiebetüre an eine rahmenfeste Verkabelung, bei der ein elastischer und isolierter Leiter 10 in einer mit der Karosserie verbundenen Führung 12 angeordnet ist. Unter einem elastischen Leiter wird hierbei jeder Leiter bzw. jedes Kabel verstanden, das einer mehrfachen Verformung folgt.

Wie Fig. 2 zeigt, ist die Führung 12 schienenartig ausgebildet und weist einen im wesentlichen C-förmigen Querschnitt auf, wobei zwischen den Schenkeln des C ein Aufnahmeschlitz 14 gebildet ist, durch den ein Mitnehmer 16 in das Innere der Führung 12 eingreift, der mit der Schiebetür (nicht dargestellt) verbunden ist. Wenn die Schiebetür des Kraftfahrzeuges geöffnet oder geschlossen wird, bewegt sich diese in ihrer Führung, wobei gleichzeitig der Mitnehmer 16 in der Führung 12 hin- und herbewegt wird.

Wie Fig. 2 ferner zeigt, ist der Leiter 10 als Flachbandkabel ausgebildet, wobei ein Ende des Flachbandkabels 10 durch eine Aussparung 18 in der Führung 12 aus der Führung herausgeführt ist. Das herausgeführte Ende des Flachbandkabels 10 ist ferner im Bereich der Aussparung 18 an der Führung 12 befestigt und wird außerhalb der Führung 12 mit der Kraftfahrzeugelektrik verbunden.

Das andere Ende des Flachbandkabels 10, das sich innerhalb der Führung 12 befindet, ist dort mit dem Mitnehmer 16 verbunden, wobei dieses Ende mit der türseitigen Verkabelung verbindbar ist.

Bei dem Leiter 10 des Ausführungsbeispiels nach den Fig. 1 und 2 sind die einzelnen Adern des Flachbandkabels aus federelastischem Werkstoff hergestellt, so daß der Leiter 10 bzw. das Flachbandkabel 10 federelastische Eigenschaften besitzt. Wie Fig. 1 zeigt, ist der Leiter 10 nach Einführen durch die Aussparung 18 in das Innere der Führung 12 eingelegt und innerhalb der Führung 12 um 180° umgelenkt, so daß der Leiter 10 an zwei gegenüberliegenden, parallelen Wänden 13 und 15 der Führung 12 anliegt. Hierbei wird der Leiter 10 durch das integrierte Federmittel stets gegen die Wände 13 und 15 gedrückt, und zwar unabhängig davon, in welcher momentanen Position sich die Schiebetür gerade befindet.

In Fig. 1 ist links die Endposition der Schiebetür dargestellt, das heißt deren geschlossene Stellung, bei welcher der Mitnehmer 16 durch die Schiebetür in seine linke Endposition bewegt ist. In Fig. 1 rechts dargestellt ist die geöffnete Position der Tür, bei welcher sich der Mitnehmer 16 in seiner rechten Endposition befindet. Wie gut zu erkennen ist, wird der Leiter 10 durch das integrierte Federmittel gegen die Wände 13 und 15 der Führung 12 gedrückt. Der Leiter 10 federt nach einer Verbiegung (beispielsweise durch Öffnen der Tür) stets in seine Ursprungsform selbständig zurück. Durch die Federeigenschaften des Flachbandkabels 10 wird dieses trotz seiner Umlenkung um 180° innerhalb der Führung stets gegen die Wände 13 und 15 der Führung 12 gedrückt. In diesem Zusammenhang ist in Fig. 2 zu erkennen, daß die Höhe der Führung 12 an die Breite des Flachbandkabels 10 angepaßt ist, so daß durch den C-förmigen Querschnitt Hinterschneidungen gebildet sind, in die das Flachbandkabel 10 eingedrückt wird. Hierdurch wird das Flachbandkabel an insgesamt drei Seiten geführt, nämlich an seiner Unterseite durch die Wand 13 oder 15 und an seinen beiden äußeren Stirnseiten durch die beiden weiteren Innenwände 17, 19 der Führung 12.

Die Fig. 3 und 4 zeigen zu Fig. 1 alternative Ausführungsformen, wobei gleiche Teile mit gleichen Bezugszeichen versehen sind.

Bei der in Fig. 3 dargestellten Ausführungsform ist der Leiter 10 wiederum als Flachbandkabel ausgebildet, wobei jedoch ein separates Federelement 20 in Form eines Federstahlbandes vorgesehen ist. Das Federelement 20 verläuft im wesentlichen parallel zu dem Leiter 10 und ist an seinem einen Ende an dem Mitnehmer 16, d.h. an der Schiebetür, und an seinem anderen (nicht dargestellten) Ende im Bereich der Aussparung 18 an der Führung 12 befestigt. Auch hier wird der Leiter 10 durch die Wirkung des Federelementes 20 stets gegen die Innenwände 13, 15 bzw. 17, 19 der Führung 12 gedrückt. Gleichzeitig dient das Federmittel als ständige Masseverbindung zwischen Schiebetüre und Karosserie.

Fig. 4 zeigt eine zu Fig. 3 ähnliche Ausführungsform, wobei jedoch zwei Leiter bzw. zwei Flachbandkabel 10, 11 vorgesehen sind, zwischen denen das Federelement 20 angeordnet ist. Bei dieser Ausführungsform kann das Federelement 20 bzw. der Federstahlstreifen 20 sowohl als Masseverbindung wie auch als elektrische Abschirmung zwischen den beiden Leitern 10 und 11 dienen, so daß Versorgungsstrom einerseits und Signale andererseits getrennt und voneinander abgeschirmt übertragen werden können.

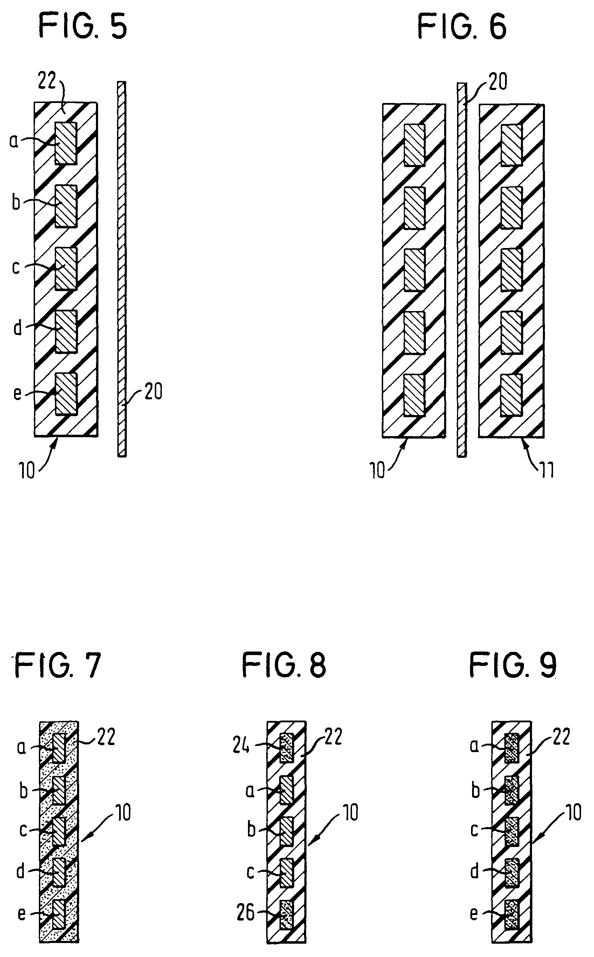

Fig. 5 zeigt einen Querschnitt durch den Leiter 10 und das Federelement 20 der Ausführungsform nach Fig. 3. Wie zu erkennen ist, ist der Leiter 10 als Flachbandkabel mit im wesentlichen rechteckigem Querschnitt ausgebildet, wobei einzelne Adern a bis e in einem Isolierkörper 22 eingebettet sind. Die einzelnen Adern a bis e besitzen ebenfalls einen im wesentlichen rechteckigen Querschnitt und können aus einem Kupferband oder aus Kupferlitzen bestehen. Das Federelement 20 ist bei dieser Ausführungsform als dünnes Flachstahlband ausgebildet und besitzt eine Breite, die etwas die Breite des Leiters 10 übersteigt.

Fig. 6 zeigt einen Querschnitt durch die Leiter 10, 11 und das Federelement 20 der Ausführungsform nach Fig. 4. Hierbei entspricht der Aufbau der Leiter 10 und 11 demjenigen von Fig. 5. Wie zu erkennen ist, ist ferner das Federelement 20 zwischen den beiden Flachbandkabeln 10 und 11 angeordnet, wodurch diese gegeneinander abgeschirmt werden können.

Die Fig. 7 bis 9 zeigen unterschiedliche Ausführungsformen von Leitern 10 bzw. 11, deren grundsätzlicher Aufbau jedoch dem der Fig. 5 und 6 gleicht. Bei der in Fig. 7 dargestellten Ausführungsform besteht der Isolierkörper 22 aus einem federnden Werkstoff, wobei die einzelnen Adern a bis e keine federelastischen Eigenschaften besitzen müssen.

Bei der in Fig. 8 dargestellten Ausführungsform sind neben den drei mittig angeordneten Adern a, b und c zwei äußere Federelemente 24 und 26 in den Isolierkörper 22 eingebettet, deren Querschnitt dem der Adern a bis c entspricht.

Schließlich zeigt Fig. 9 eine weitere Variante eines Leiters 10, die bei dem in den Fig. 1 und 2 dargestellten Ausführungsbeispiel verwirklicht ist. Bei dieser Variante bestehen die einzelnen Adern a bis e aus einem federnden Werkstoff und sind in eine herkömmliche Isolierung 22 eingebettet.

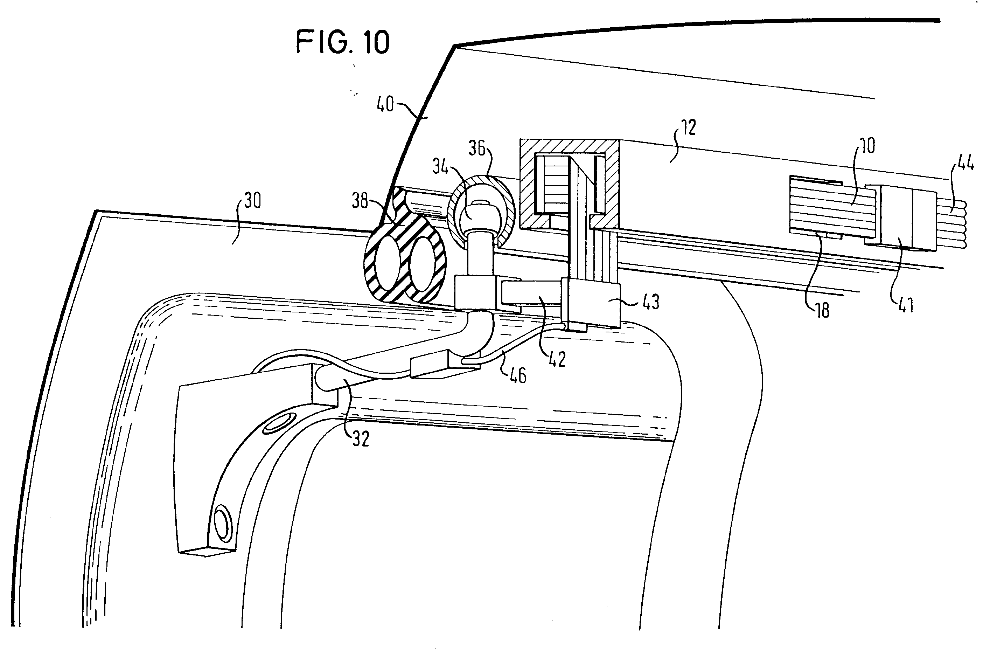

Fig. 10 zeigt die perspektivische Ansicht einer elektrischen Verbindung gemäß der Erfindung, die in ein Kraftfahrzeug eingebaut ist. Fig. 10 zeigt eine Schiebetür 30 eines Kraftfahrzeuges, die über einen Haltearm 32, an dessen Ende eine Führungsrolle 34 befestigt ist, in einer horizontalen Führungsschiene 36 geführt ist. Zur Abdichtung zwischen der Schiebetür 30 und der Fahrzeugkarosserie 40 dient eine Türdichtung 38.

Mit dem Führungsarm 32 verbunden ist ein Ausleger 42, an dessen Ende der vertikal verlaufende Mitnehmer 16 befestigt ist, der in Fig. 10 jedoch nicht erkennbar ist. Die Führung 12 ist neben und parallel zu der Führungsschiene 36 für die Schiebetür 30 angeordnet und so orientiert, daß die schlitzförmige Öffnung der Führung 12 nach unten weist.

In Fig. 10 ist ferner zu erkennen, daß sich das Flachbandkabel 10 durch die Aussparung 18 erstreckt, wobei am Ende des Flachbandkabels 10 außerhalb der Führung 12 ein Anschlußstecker 42 vorgesehen ist, der außen an der Führung 12 befestigt ist und der zum Anschluß an den Fahrzeugkabelbaum 44 dient. Ferner ist in Fig. 10 gut zu erkennen, daß der Leiter 10 innerhalb der Führung 12 jeweils dreiseitig geführt an den vertikalen Innenwänden anliegt.

Das aus der Führung 12 nach unten herausgeführte Flachbandkabel 10 ist im Bereich des Mitnehmers 16 mit einem weiteren Anschlußstecker 43 verbunden mit dem der Anschluß an den Türkabelbaum 46 erfolgt.

### Bezugszeichenliste

- 10, 11: Leiter
- 12: Führung
- 13: Band
- 14: Aufnahmeschlitz
- 15: Wand
- 16: Mitnehmer
- 17: Innenwand
- 18: Aussparung
- 19: Innenwand
- 20,24,26: Federelement
- 22: Isolierkörper
- 30: Schiebetür
- 32: Führungsarm
- 34: Führungsrolle
- 36: Führungsschiene
- 38: Türdichtung
- 40: Karosserie
- 42, 43: Anschlußstecker
- 44: Fahrzeugkabelbaum
- 46: Türkabelbaum
- a bis e: Adern

## Patentansprüche

1. Elektrische Verbindung zur Anbindung einer Kraftfahrzeugschiebetüre (30) an eine rahmenfeste Verkabelung (44),
**gekennzeichnet** durch
zumindest einen elastischen und isolierten Leiter (10, 11), der in einer karosseriefesten Führung (12) angeordnet und dort bevorzugt um etwa 180° umgelenkt ist, in die ein Mitnehmer (16) der Schiebetür (30) eingreift, an dem ein Ende des Leiters (10, 11) befestigt ist, das mit der türseitigen Verkabelung (46) verbindbar ist, wobei ein Federmittel (20, 24, 26) vorgesehen ist, durch das der Leiter (10, 11) zumindest teilweise gegen die Führung (12) gedrückt wird.

2. Verbindung nach Anspruch 1,
dadurch **gekennzeichnet,** daß
das Federmittel (24) durch den Leiter selbst gebildet und/oder in diesen integriert ist.

3. Verbindung nach Anspruch 2,
dadurch **gekennzeichnet,** daß
der Leiter und/oder dessen Isolierung (22) aus einem federelastischen Werkstoff besteht.

4. Verbindung nach Anspruch 1,
dadurch **gekennzeichnet,** daß
das Federmittel als separates Bauteil (20) vorgesehen ist und vorzugsweise aus elektrisch leitendem Material besteht, wobei das Federmittel bevorzugt an seinem einen Ende elektrisch leitend mit der Karosserie (40) und an seinem anderen Ende elektrisch leitend mit der Schiebetüre (30) verbunden ist.

5. Verbindung nach Anspruch 4,
dadurch **gekennzeichnet,** daß
das Federmittel (20) im wesentlichen parallel zu dem Leiter angeordnet ist.

6. Verbindung nach Anspruch 4 oder 5,
dadurch **gekennzeichnet,** daß
zumindest zwei separate Leiter (10, 11) vorgesehen sind, zwischen denen das Federmittel (20) vorgesehen ist, das vorzugsweise aus elektrisch leitendem Material besteht.

7. Verbindung nach zumindest einem der vorstehenden Ansprüche,
dadurch **gekennzeichnet,** daß
die Führung (12) den Leiter (10, 11) an zwei, vorzugsweise an drei Seiten führt.

8. Verbindung nach zumindest einem der vorstehenden Ansprüche,
dadurch **gekennzeichnet,** daß
die Führung (12) einen im wesentlichen C-förmigen Querschnitt aufweist und vorzugsweise schienenartig ausgebildet ist.

9. Verbindung nach zumindest einem der vorstehenden Ansprüche,
dadurch **gekennzeichnet,** daß
der Leiter (10, 11) ein mehrpoliges Flachbandkabel ist.
